# EUROPÄISCHE PATENTSCHRIFT

(11) **EP 0 787 052 B1**
(45) Veröffentlichungstag und Bekanntmachung des Hinweises auf die Patenterteilung: **09.09.1998**
(21) Anmeldenummer: 95935341.8
(22) Anmeldetag: 18.10.1995
(51) Int. Cl.: B23C 5/24

(54) **FRÄSER**
MILLING CUTTER
FRAISE

(30) Priorität: 20.10.1994 DE 4437426
(43) Veröffentlichungstag der Anmeldung: 06.08.1997
(73) Patentinhaber: Widia GmbH, 45145 Essen (DE)
(72) Erfinder: ROTHBALLER, Gerhard, D-91611 Lehrberg (DE); MAURER, Jürgen, D-91575 Windsbach (DE)
(74) Vertreter: Schieferdecker, Lutz, Dipl.-Ing.
(86) Internationale Anmeldenummer: DE9501453
(87) Internationale Veröffentlichungsnummer: WO9612584

(56) Entgegenhaltungen:
- DE-A- 2 140 004
- DE-A- 2 339 873
- US-A- 3 359 612
- MACHINERY AND PRODUCTION ENGINEERING, Bd.123, Nr.3168, 8. August 1973, BURGESS HILL GB Seiten 167 - 168 ASTROP 'A new range of versatile indexable-tip facing cutters'

## Beschreibung

Die Erfindung betrifft einen Fräser mit einem Grundkörper und mit einem ringförmigen Stützelement in Gestalt eines Anlageringes für im Grundkörper angeordnete Kassetten mit Schneidplatten sowie mit weiteren Merkmalen gemäß dem Oberbegriff des Anspruches 1.

Fräser der genannten Art sind grundsätzlich seit langem bekannt. So beschreibt z.B. die DE 32 36 921 C1 ein Fräswerkzeug mit einem Anlagering und mit Einstellelementen, die zwischen Anlagering und Kassettenende angeordnet sind. Die Form und Gestalt der zur Aufnahme der Kassetten dienenden Ausnehmungen ist wegen weiterer, dort angeordneter Funktionselemente aufwendig und kompliziert. Die Herstellung des Grundkörpers ist mit hohen Kosten verbunden und ferner ist der Grundkörper nur für spezielle Zwecke einsetzbar.

Der Erfindung liegt die Aufgabe zugrunde, Maßnahmen vorzusehen, damit sich der Grundkörper kostengünstig herstellen läßt und vielseitig verwendbar ist.

Gelöst wird diese Aufgabe an einem Fräser mit den Merkmalen des kennzeichnenden Teiles des Anspruches 1.

Charakteristisch für den erfindungsgemäßen Fräser ist, daß an seinem Grundkörper die zur Aufnahme der Kassetten dienenden, kanalförmigen Ausnehmungen sich ohne Vorsprünge und/oder Hinterschneidungen von seiner einen Stirnfläche bis zu seiner anderen Stirnfläche erstrecken, wobei der Boden und die Wände der die Kassetten jeweils aufnehmenden Ausnehmungen eben und glatt sind. Hierdurch wird nicht nur eine kostengünstige, weil wenig arbeitsaufwendige Herstellung des Grundkörpers selbst erreicht, sondern es läßt sich auch die Form und Gestalt der Kassetten optimieren.

Gemäß einer Weiterbildung der Erfindung ist ein Fräser mit den Merkmalen des Anspruches 1 Teil eines Fräser-Bausatzes, der ferner ein die Kassetten unmittelbar sowie vollflächig an seiner einen Stirnfläche abstützendes, ringförmiges zweites Stützelement und/oder ein drittes, ringförmiges Stützelement umfasst, das kassettenseitig großflächige Anlageflächen zur vollflächigen, unmittelbaren Anlage der Enden der Kassetten und ferner mindestens eine einzige Ausnehmung für ein Einstellelement in Gestalt eines Verstellkeiles und eine zugehörige Gewindebohrung aufweist, wobei wiederum die lichte Weite A der Ausnehmung zur Kassette hin geringer ist als die entsprechende Breite B des anliegenden Endes der Kassette. Ein derartiger Fräser-Bausatz besitzt den Vorteil, daß ein und derselbe Grundkörper mit Spankammern usw. wahlweise mit verschiedenen, ringförmigen Stützelementen verwendet werden kann, wobei es möglich ist, den Fräser so zu gestalten, daß er entweder nur zum Schlichten oder nur zum Schruppen geeignet ist oder auch sich mit Schrupp-und gleichzeitig mit Schlichtschneiden bestücken läßt. Die oben erwähnte Breite B und die stirnseitige, lichte Weite A der Ausnehmungen im ringförmigen Stützelement (Anlagering) sind in besonderer Weise aufeinander abgestimmt. Dadurch wird erreicht, daß die Kassetten entweder am Anlagering als Festanschlag anliegen oder mit Hilfe der Einstellelemente, bei denen es sich um Verstellkeile handelt, in axialer Richtung einstellbar sind. Hierbei ist vorgesehen, daß ein Einstellelement/Verstellkeil nur einer einzigen Kassette zugeordnet ist, so daß einzelne Kassetten zur Schruppbearbeitung dienen können, während es möglich ist, die einstellbaren Kassetten zum Schlichten vorzusehen.

Auf ein und demselben Grundkörper sind somit prinzipiell drei verschiedene Anlageringe verwendbar. Ein erster Anlagering weist Einstellelemente für jede Kassette auf, ein zweiter Anlagering weist überhaupt keine Einstellelemente auf und bei einem dritten Anlagering sind Einstellelemente zwar für einzelne, nicht jedoch für alle Kassetten vorgesehen. In allen Fällen ist der Grundkörper gleich.

Die Erfindung wird nachstehend anhand von Ausführungsbeispielen, die in der Zeichnung dargestellt sind, näher beschrieben. Dabei zeigen:
- Fig. 1:: eine perspektivische Ansicht des Fräsers;
- Fig. 2:: eine perspektivische Ansicht des Fräsers in kleinerem Maßstab sowie in Explosionsdarstellung;
- Fig. 3:: einen Radialschnitt durch den Fräser;
- Fig. 4:: eine Explosionsdarstellung von wesentlichen Teilen eines abgewandelten Fräsers;
- Fig. 5: bis Fig. 8:: perspektivische Darstellungen verschiedener Kassetten mit unterschiedlichen Schneidelementen in größerem Maßstab und
- Fig.9,10:: zwei verschiedene perspektivische Darstellungen eines dritten ringförmigen Stützelementes/Anlageringes.

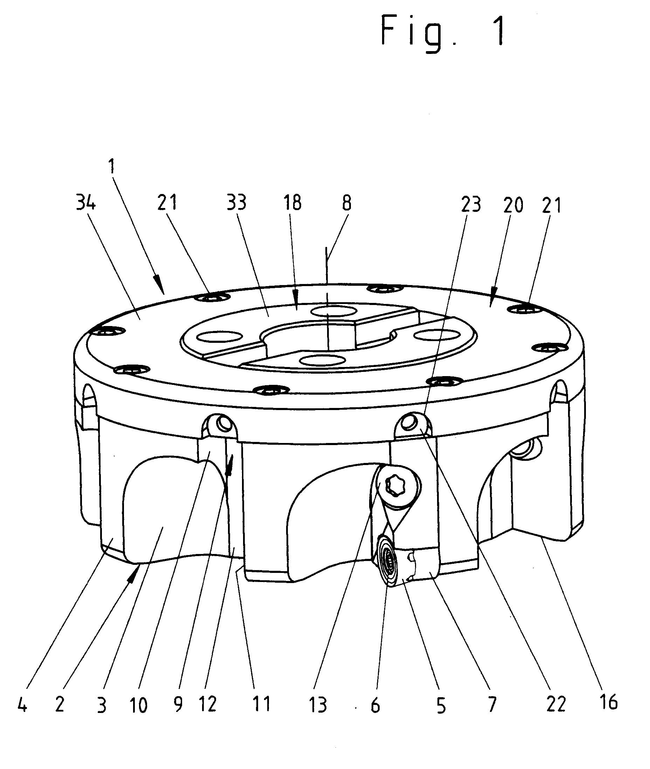

Ein Fräser 1 umfaßt gemäß Fig. 1 einen Grundkörper 2 mit Spankammern 3 an seinem Umfang 4. Er weist ferner Schneidelemente 5 z.B. in Gestalt von Wendeschneidplatten auf, die mit Hilfe von Befestigungselementen/Schrauben 6 befestigbar sind.

Die Schneidelemente 5 sind auf Kassetten 7 angeordnet. Für jede Kassette 7 ist am Umfang 4 des Grundkörpers 2 eine sich parallel zur Drehachse 8 des Fräsers 1 erstreckende, kanalförmige Ausnehmung 9 vorgesehen. Die Wände 10 und 11 und der Boden 12 der kanalförmigen Ausnehmungen 9 sind eben und glatt, wobei ferner die Wände 10 und 11 vorzugsweise parallel zueinander stehen. Ferner sind die kanalförmigen Ausnehmungen 9 zu den benachbarten Spankammern 3 hin offen, so daß also die in Drehrichtung vorlaufende Wand 10 kürzer ist als die andere Wand 11.

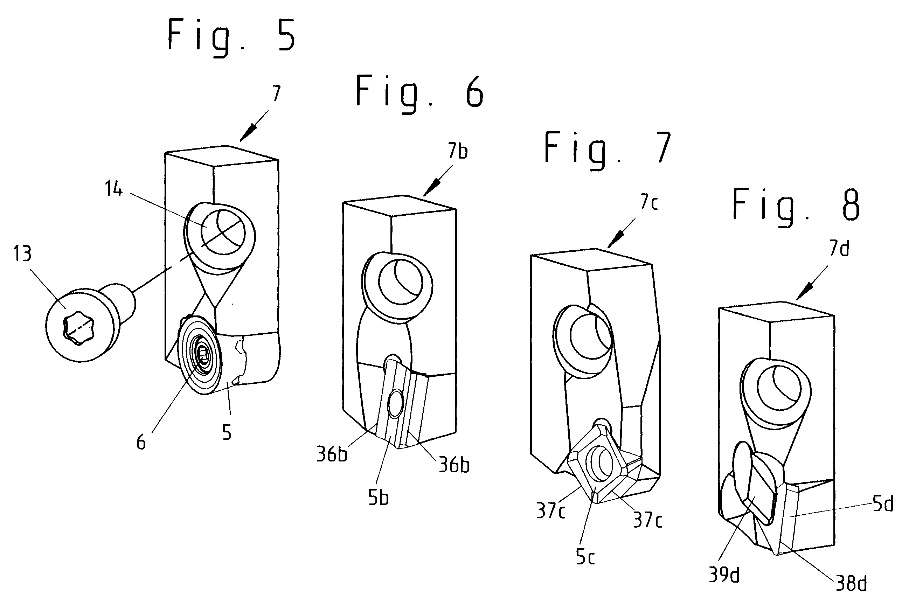

Die Ausnehmungen 9 dienen zur Aufnahme von Kassetten mit jeweils einfacher prismatischer Grundform bzw. mit einfacher, geometrischer Gestalt, wie dies auch anhand der in den Figuren 5 bis 8 dargestellten, unterschiedlichen Ausführungsbeispiele veranschaulicht ist. Zur Befestigung der Kassetten 7 dienen Befestigungselemente z.B. in Gestalt von Befestigungsschrauben 13, die durch eine Bohrung 14 in der jeweiligen Kassette 7 und bis in eine Gewindebohrung 15 im Grundkörper 2 greifen.

Der Querschnitt der die Kassetten 7 aufnehmenden, kanalförmigen Ausnehmungen 9 ist über deren gesamte Länge konstant, wobei lediglich die Spankammern 3 in diese Ausnehmungen 9 auslaufen. Unabhängig davon erstrecken sich die Ausnehmungen jedoch ohne Vorsprünge oder Hinterschnitte von der einen Stirnfläche 16 bis zur anderen Stirnfläche 17 des Grundkörpers 2 und laufen vor allem an der den Schneidelementen 5 gegenüberliegenden Stirnfläche 17 in voller Breite aus. Die Herstellung der Ausnehmungen 9 ist daher einfach.

Ein Nabenteil 18 des Grundkörpers 2 erhebt sich axial über die Stirnfläche 17 und liegt mit seinem Umfang 19 auf einem kleineren Radius als der Boden 12 der jeweiligen Ausnehmung 9.

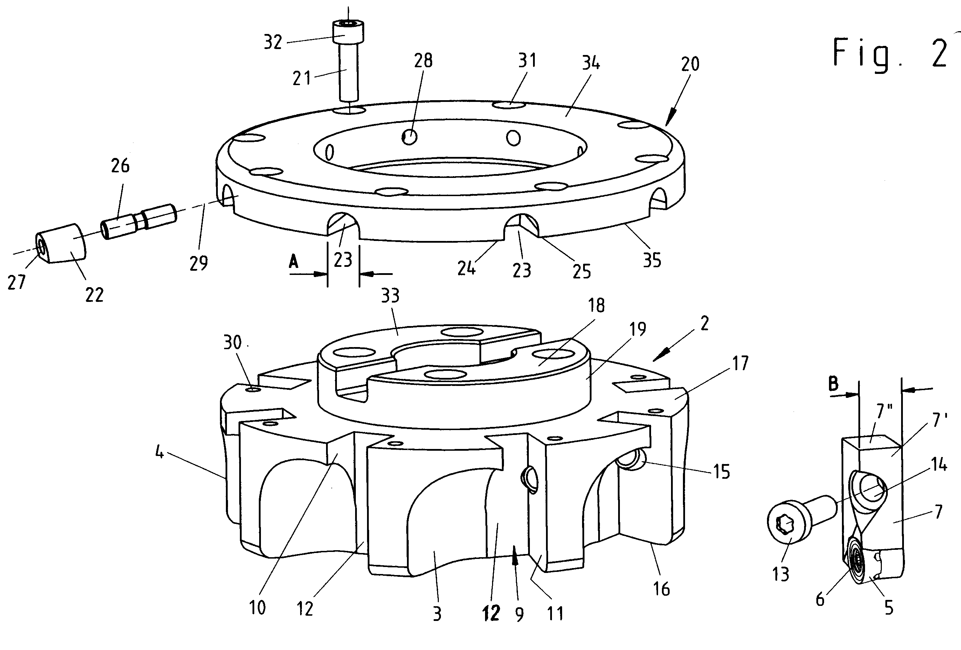

Wie die Figuren 1 und 2 ferner zeigen, ist ein Stützelement 20 vorgesehen und mehreren Schneidelementen 5 zugeordnet.

Gemäß Ausführungsbeispiel ist das Stützelement 20 ringförmig und von seiner Funktion her ein Anlagering. Grundsätzlich kann es aber auch aus zwei oder mehreren Segmenten bestehen, die jeweils mindestens zwei oder mehr Ausnehmungen 9 übergreifen und mehreren Kassetten 7 mit Schneidelementen 5 zugeordnet sind.

Gemäß dem in den Figuren 1 bis 3 dargestellten, ersten Ausführungsbeispiel ist das Stützelement 20 ringförmig und daher allen Schneidelementen 5 zugeordnet. Das Stützelement 20 verschließt im zusammengebauten Zustand im Bereich der Stirnfläche 17 des Grundkörpers 2 die Ausnehmungen 9. Hierzu wird das ringförmige Stützelement 20 mit Hilfe von Schrauben 21 auf der Stirnfläche 17 befestigt.

Im zusammengebauten Zustand liegen die Kassetten 7 mit ihren den Schneidelementen 5 abgewandten Enden 7' flächig an dem Stützelement 20 oder an in dem Stützelement 20 angeordneten Einstellelementen 22 an, so daß das Stützelement 20 axial gerichtete Schneidkräfte der Schneidelemente 5 aufnehmen kann.

Die Einstellelemente 22 sind Verstellkeile/Rundkeile und befinden sich in radial gerichteten und zu den Anlageflächen 7'' der Kassetten 7 hin offenen Ausnehmungen 23.

Die lichte Weite A der zu den Kassetten 7 hin offenen Ausnehmungen 23 ist geringer als die Breite der kanalförmigen Ausnehmungen 9 im Grundkörper 2 bzw. als die entsprechende Breite B der Kassetten 7. Bei vollständig in der Ausnehmung 23 befindlichem Einstellelement/Verstellkeil 22 kann die Kassette 7 daher an den Rändern 24, 25 der Ausnehmung 23 und somit dort als Festanschlag anliegen.

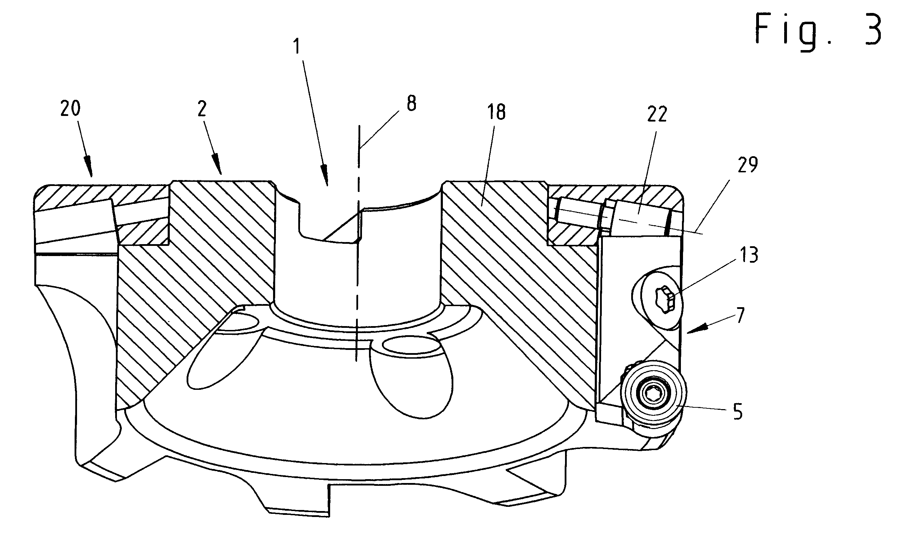

Zum Verstellen des Einstellelementes/Verstellkeiles 22 dient gemäß Ausführungsbeispiel eine Doppelgewindeschraube 26, die einerseits in eine Gewindebohrung 27 im Einstellelement 22 und ferner in eine Gewindebohrung 28 im ringförmigen Stützelement 20 greift. Die Achse 29 für die Doppelgewindeschraube 26 ist von der Drehachse 8 des Fräsers 1 zur jeweiligen Kassette 7 hin leicht geneigt (Fig. 3). Das Einstellelement/Verstellkeil 22 ist daher in der Lage, für die Kassette 7 an einer genau definierten Stelle in Richtung parallel zur Drehachse 8 als Anschlag zu dienen.

Die Verwendung der Ränder 24 und 25 der Ausnehmung 23 im Stützelement 20 als Festanschlag ist vor allem dann sinnvoll, wenn der Fräser 1 zur Grobbearbeitung/Schruppen eingesetzt wird. Im Falle einer Schlichtbearbeitung und bei hohen Anforderungen an die Planlauf-Genauigkeit erfolgt die Einstellung der Kassetten 7 mit Hilfe der Einstellelemente/Verstellkeile 22.

Die zum Fixieren des Stützelementes 20 dienenden Schrauben 21 greifen im Grundkörper in parallel zur Drehachse 8 gerichtete Gewindebohrungen 30 und liegen in einfachen, abgesetzten Bohrungen 31 im ringförmigen Stützelement 20 derart, daß der jeweilige Schraubenkopf 32 versenkt angeordnet ist. Das ringförmige Stützelement 20 umgreift schließlich formschlüssig das Nabenteil 18 des Grundkörpers 2, wobei die Stirnfläche 33 des Nabenteiles 18 in einer höheren Ebene liegt wie die freie Stirnfläche 34 des Stützelementes 20.

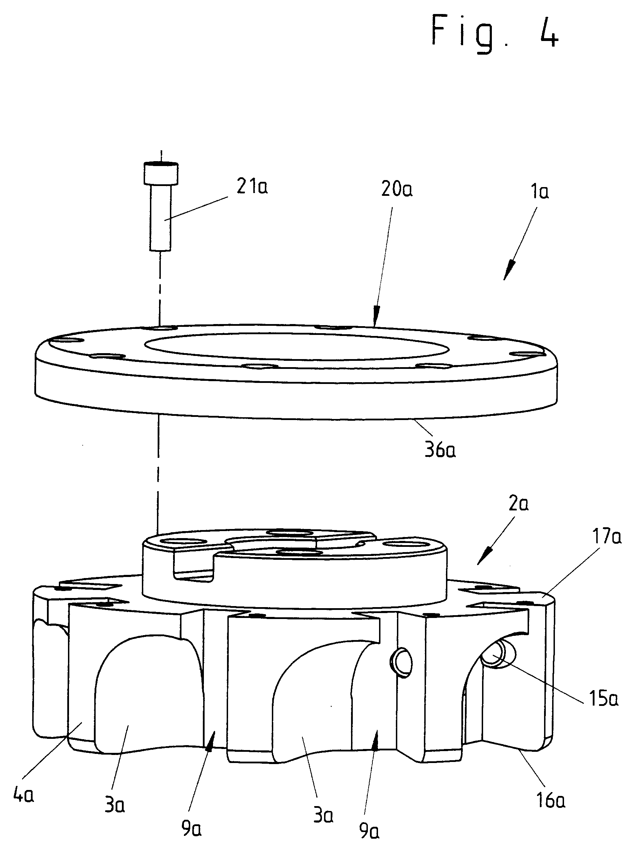

Während der in den Figuren 1 bis 3 dargestellte Fräser 1 zum Schlichten und zum Schruppen verwendet werden kann, betrifft Fig. 4 ein Ausführungsbeispiel eines Fräsers 1a, der nur als Schruppfräser einsetzbar ist. Grundsätzlich gleiche Teile weisen bei diesem Ausführungsbeispiel dieselben Bezugszahlen wie zuvor und zusätzlich den Buchstabenindex a auf.

Der Grundkörper 2a des Fräsers 1a stimmt identisch mit dem Grundkörper 2 des Fräsers 1 überein. Unterschiede bestehen nur bei dem ringförmigen Stützelement 20a, da die integrierten Einstellelemente fehlen. Stattdessen weist das ringförmige Stützelement 20a/der Anlagering 20a eine durchgehend ebene sowie glatte, den Kassetten bzw. Ausnehmungen 9a im Grundkörper 2a zugewandte Stirnfläche 36a auf. Die Kassetten 7 (gemäß Fig. 2) liegen daher mit ihren Anschlagflächen 7'' am Ende 7' großflächig und entsprechend ihrem gesamten, die kanalförmigen Ausnehmungen 9a füllenden Querschnitt unmittelbar an der Stirnfläche 36a an.

Ein sehr wesentlicher Vorteil, der mit dem Fräser 1 bzw. mit dem Fräser 1a erzielbar ist, besteht darin, daß beide Fräser bei gleicher Geometrie in Verbindung mit unterschiedlich wirkenden Kassetten und Schneidelementen eingesetzt werden können. Gemäß Fig. 5 trägt die Kassette 7 ein rundes Schneidelement 5. Gemäß dem in Fig. 6 dargestellten Ausführungsbeispiel kann eine Kassette 7b bei gleicher Grundgeometrie ein Schneidelement 5b in Gestalt einer Wendeschneidplatte mit zwei parallelen Schneiden 36b tragen.

Ein Schneidelement 5c in Gestalt einer Wendeschneidplatte mit vier Schneiden 37c ist auf der Kassette 7c gemäß Fig. 7 angeordnet. Die Schneiden 37c können dabei auch unter einem von 90° abweichenden Winkel zur Drehachse 8 des Fräsers stehen. Die Grundform der Kassette 7c ist in diesem Fall ferner zur Aufnahme des Schneidelementes 5c im Bereich ihres freien Endes verstärkt.

Schließlich betrifft Fig. 8 eine Kassette 7d, auf der ein z.B. drei Schneiden 38d aufweisendes Schneidelement 5d mit Hilfe einer Klemmeinrichtung 39d befestigt ist.

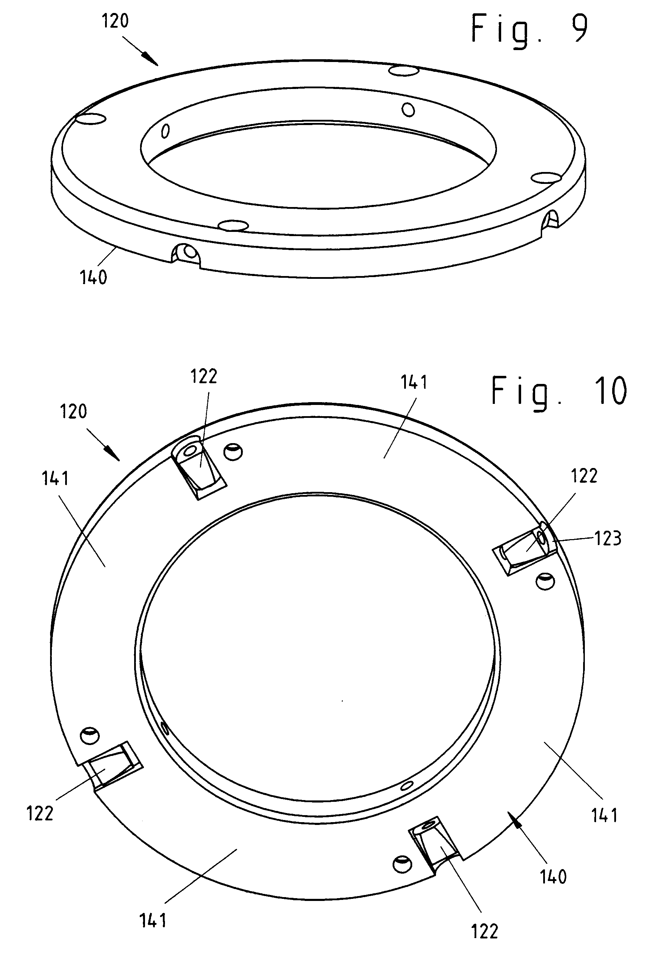

Wesentlich ist somit, daß der für alle Anwendungsfälle gleichartige Grundkörper mit hinsichtlich ihrer Funktion unterschiedlichen Kassetten bzw. Anlageringen verwendbar ist, wozu auch das in den Figuren 9 und 10 dargestellte, ringförmige Stützelement 120/Anlagering gehört.

Der Anlagering 120 weist eine den nicht dargestellten Kassetten zugewandte Stirnfläche 140 auf, die mit Hilfe von radial verstellbaren Einstellelementen/Verstellkeilen 122 in unmittelbar wirksame Anschlagflächen 141 für Kassetten unterteilt ist. In dem Anlagering 120 befinden sich daher weniger Einstellelemente 122 als Kassetten in einem zugehörigen, jedoch nicht dargestellten Grundkörper vorgesehen sind.

Die jeweils zwischen den Einstellelementen 122 angeordneten Anschlagflächen 141 dienen als Festanschlag für Kassetten im Grundkörper. Diese Kassetten können zum Schruppen dienen. Die anderen, den Einstellelementen 122 zugeordneten Kassetten können zum Schlichten dienende Schneiden tragen und auf ein genaues Maß eingestellt werden. Ein Fräser mit einem Anlagering 120 läßt sich daher problemlos für zwei Funktionen einsetzen, wobei er kostengünstig herstellbar ist, da gegebenenfalls nur eine einzige Ausnehmung 123 für ein Einstellelement 122/Verstellkeil mit der zugehörigen Gewindebohrung vorgesehen werden müssen.

Alle anderen Merkmale, die zur Befestigung des Anlageringes 120 am Grundkörper dienen, sind ebenso gestaltet wie im Falle der bereits obenen beschriebenen Ausführungsbeispiele.

## Patentansprüche

1. Fräser mit einem Grundkörper (2), der an seinem Umfang (4) Spankammern (3) und zugehörige Ausnehmungen (9) zur Aufnahme von Schneidelemente (5) tragenden Kassetten (7) aufweist, wobei die zu den Spankammern (3) hin offenen, kanalförmigen und zur Aufnahme der Kassetten (7) dienenden Ausnehmungen (9) je einen Boden (12) und Wände (10, 11) aufweisen, die bis zur Stirnfläche (17) des Grundkörpers (2) eben und durchgehend frei von Vorsprüngen und/oder Hinterschneidungen sind, und mit einem ringförmigen Stützelement (20, 120), das an einer den Schneidelementen (5) abgewandten Stirnfläche (17) des Grundkörpers (2) angeordnet ist und zur axialen Abstützung der Kassetten (7) dient, dadurch gekennzeichnet, daß mindestens ein Einstellelement in Form von einem Verstellkeil (22, 122) vorgesehen ist und mit Hilfe einer Doppelgewindeschraube (26) in einer Ausnehmung (23, 123) in dem ringförmigen Stützelement (20, 120) radial verstellbar ist und daß die lichte Weite (A) der Ausnehmung (23) zur Kassette (7) hin geringer ist als die entsprechende Breite (B) des anliegenden Endes (7') der Kassette (7), so daß die Kassette (7) bis zum Anschlag an den Rändern (24, 25) der Ausnehmung (23, 123) verstellbar ist.

2. Fräser nach Anspruch 1, dadurch gekennzeichnet, daß die Achse (29) für die Doppelgewindeschraube (26) von der Drehachse (8) des Fräsers (1) zur jeweiligen Kassette hin leicht derart geneigt ist, daß sich das Einstellelement bei einer radial einwärts gerichteten Verstellung in das Innere des ringförmigen Stützelementes (20, 120) bewegt.

3. Fräser nach Anspruch 1, dadurch gekennzeichnet, daß die den Kassetten zugewandte Stirnfläche (140) des ringförmigen Stützelementes (120) unmittelbar als Festanschlag für die Kassetten dienende Anschlagflächen (141) für Kassetten und nur einzelne und gegebenenfalls nur eine einzige Ausnehmung (123) für ein Einstellelement/Verstellkeil (122) mit zugehöriger Gewindebohrung für eine Doppelgewindeschraube aufweist.

4. Fräser-Bausatz mit einem Fräser gemäß Anspruch 1 mit einem Grundkörper (2) und einem ersten ringförmigen Stützelement (20) sowie mit einem die Kassetten (7) unmittelbar sowie vollflächig an der Stirnfläche (36a) abstützenden, ringförmigen zweiten Stützelement (20a) und/oder mit einem dritten, ringförmigen Stützelement (120), das kassettenseitig großflächige Anlageflächen (141) zur vollflächigen, unmittelbaren Anlage der Enden (7') der Kassetten (7) und ferner mindestens eine einzige Ausnehmung (123) für ein Einstellelement (122) in Gestalt eines Verstellkeiles und eine zugehörige Gewindebohrung aufweist, wobei die lichte Weite A der Ausnehmung (23, 123) zur Kassette (7) hin geringer ist als die entsprechende Breite B des anliegenden Endes (7') der Kassette (7).

## Claims

1. A milling cutter having a main body (2) which at its periphery (4) has chip chambers (3) and associated recesses (9) for receiving adaptors (7) carrying cutting elements (5), wherein the channel-shaped recesses (9) which are open towards the chip chambers (3) and which serve to receive the adaptors (7) each have a bottom (12) and walls (10, 11) which as far as the end face (17) of the main body (2) are flat and throughout free from projections and/or undercut configurations, and an annular support element (20, 120) which is arranged at an end face (17) of the main body (2), that is remote from the cutting elements (5), and serves for axially supporting the adaptors (7), characterised in that there is provided at least one setting element in the form of an adjusting taper member (22, 122) and the setting element is radially adjustable by means of a double screwthread screw (26) in an opening (23, 123) in the annular support element (20, 120) and that the internal width (A) of the opening (23) towards the adaptor (7) is less than the corresponding width (B) of the end (7') bearing thereagainst of the adaptor (7) so that the adaptor (7) is adjustable until it bears against the edges (24, 25) of the opening (23, 123).

2. A milling cutter according to claim 1 characterised in that the axis (29) for the double screwthread screw (26) is slightly inclined from the axis of rotation (8) of the milling cutter (1) towards the respective adaptor in such a way that upon radially inwardly directed adjustment the setting element moves into the interior of the annular support element (20, 120).

3. A milling cutter according to claim 1 characterised in that the end face (140), which is towards the adaptors, of the annular support element (120) has abutment faces (141) for adaptors, which abutment faces serve directly as a fixed abutment for the adaptors, and has only individual and possibly only a single opening (123) for a setting element/adjusting taper member (122) with associated screwthreaded bore for a double screwthread screw.

4. A milling cutter kit comprising a milling cutter according to claim 1 having a main body (2) and a first annular support element (20) and a second annular support element (20a) which supports the adaptors (7) directly and over the full surface area against the end face (36a) and/or a third annular support element (120) which has contact surfaces (141) of large area on the adaptor side for full-area direct contact of the ends (7') of the adaptors (7) and also at least one single opening (123) for a setting element (122) in the form of an adjusting taper member and an associated screwthreaded bore, wherein the internal width A of the opening (23, 123) towards the adaptor (7) is smaller than the corresponding width B of the end (7') bearing thereagainst of the adaptor (7).

## Revendications

1. Fraise avec un corps de base (2) qui présente sur son pourtour (4) dos logements de copeaux (3) et des évidement associés (9) pour recevoir des cassettes (7) portant des éléments tranchants (5), où les évidements (9) ouverts vers les logements de copeaux (3), en forme de canal et destinés à recevoir les cassettes (7) présentent chacun un fond (12) et des parois (10, 11) qui, jusqu'à la surface frontale (17) du corps de base (2) sont plans et entièrement exempts de saillies et/ou de contre-dépouilles et avec un élément d'appui annulaire (20, 120) qui est disposé à une surface frontale (17) du corps de base (2) éloignée des éléments tranchants (5) et qui est destiné à supporter axialement les cassettes (7), caractérisée en ce qu'il est prévu au moins un élément d'ajustement sous la forme d'un coin d'ajustement (22, 122) et qui est ajustable radialement à l'aide d'un boulon à filetage double (26) dans un évidement (23, 123) dans l'élément d'appui annulaire (20, 120), et en ce que le largeur intérieure (A) de l'évidement (23) vers la cassette (7) est plus petite que la largeur correspondante (B) de l'extrémité d'application (7') de la cassette (7) de telle sorte que la cassette (7) est ajustable jusqu'à ce qu'elle bute contre les bords (24, 25) de l'évidement (23, 123).

2. Fraise selon la revendication 1, caractérisée en ce que l'axe (29) pour le boulon à filetage double (26) est incliné depuis l'axe de rotation (8) de le fraise (1) vers la cassette respective légèrement de façon que l'élément d'ajustement, lors d'un déplacement orienté radialement vers l'intérieur, s'engage dans l'intérieur de l'élément d'appui annulaire (20, 120),

3. Fraise selon la revendication 1, caractérisée en ce que le surface frontale (140) orientée vers les cassettes de l'élément d'appui annulaire (120) présente des surfaces de butée (141) pour des cassettes servant directement de butée fixe pour les cassettes et seulement des évidements individuels et le cas échéant un seul évidement (123) pour un élément d'ajustement/coin d'ajustement (122) avec un perçage fileté associé pour un boulon à filetage double.

4. Jeu de pièces de fraise comportant une fraise selon la revendication 1, avec un corps de base (2) et un premier élément d'appui annulaire (20) ainsi qu'un deuxième élément d'appui annulaire (20a) supportent les cassettes (7) directement et avec toute sa surface à la surface frontale (36a) et/ou avec un troisième élément d'appui annulaire (120) qui présente, côté cassette, de grandes surfaces d'application (141) pour l'application directe de toute la surface dos extrémités (7') des cassettes (7) et on outre au moins un seul évidement (123) pour un élément d'ajustement (122) sous forme de coin d'ajustement et un perçage fileté associé, la largeur intérieure (A) de l'évidement (23, 123) vers la cassette (7) étant plus petite que la largeur correspondante (B) de l'extrémité d'application (7') de la cassette (7),
